# EUROPEAN PATENT APPLICATION

(11) **EP 4 013 084 A1**
(43) Date of publication of application: **15.06.2022**
(21) Application number: 21213883.8
(22) Date of filing: 10.12.2021
(51) Int. Cl.: H04W 4/42, H04W 4/80, H04L 67/12, H04W 4/48

(54) **AIRCRAFT INSERT NETWORK CONFIGURATION USING TAG**

(30) Priority: 10.12.2020 US 202017118362
(71) Applicant: Koninklijke Fabriek Inventum B.V., 3439 MG Nieuwegein (NL)
(72) Inventor: HUIJSING, Hans, 3404 KD IJsselstein (NL); PEREZ CAMACHO, Manuel, 3431BH Nieuwegein (NL)
(74) Representative: Dehns

(57) **Abstract**

An aircraft insert includes a body (101) and a wireless network module (103) configured to create an insert host network for one or more devices to connect to the wireless network module in a host mode, and to connect to an aircraft network in a client mode. The insert includes a data tag(105) mounted on or within the body, the data tag readable by a Personal Electronic Device (PED) (107) and having insert host network information to allow the PED to connect to the insert wireless network when the wireless network module is in the host mode. The wireless network module is configured to receive aircraft network information from the PED in the host mode to connect to the aircraft network when in the client mode.

## Description

### FIELD

This disclosure relates to aircraft inserts (e.g., ovens and other appliances).

### BACKGROUND

Aircraft may progressively utilize network connected inserts, e.g., wifi connectable ovens for cooking meals. However, inserts are intentionally removable and useable on multiple aircraft with different networks and access information, causing networking barriers. Such inserts generally lack a suitable interface for users to input necessary data to connect an insert to a particular network, for example.

Conventional methods and systems have generally been considered satisfactory for their intended purpose. However, there is still a need in the art for improved aircraft insert networking systems. The present disclosure provides a solution for this need.

### SUMMARY

An aircraft insert can include a body and a wireless network module configured to create an insert host network for one or more devices to connect to the wireless network module in a host mode, and to connect to an aircraft network in a client mode. The insert can include a data tag mounted on or within the body, the data tag readable by a Personal Electronic Device (PED) and having insert host network information to allow the PED to connect to the insert host network when the wireless network module is in the host mode. The wireless network module can be configured to receive aircraft network information from the PED in the host mode to connect to the aircraft network when in the client mode. The data tag can be a wireless communication tag configured to be read and/or written to by a PED. For example, the data tag can be Radio Frequency Identification (RFID) tag. Any suitable type of tag having any suitable hardware and/or software to allow wireless communication is contemplated herein. In certain embodiments, the data tag can be or include a barcode or QR code.

In certain embodiments, the wireless network module can be configured to be manually set into host mode by a user input using an interface of the insert. In certain embodiments, the wireless network module can be configured to automatically change to host mode when an aircraft network is not connected to and/or found within a preset period of time or connection attempts.

In certain embodiments, in the host mode, the wireless network module can be configured to allow the PED to connect to the wireless network module, then receive aircraft network data from the PED, then switch to the client mode, and then connect to the aircraft network using the aircraft network data provided by the PED. In certain embodiments, the insert can be an oven.

In accordance with at least one aspect of this disclosure, an aircraft galley device can include any suitable embodiment of an insert disclosed above and/or portions thereof. Any suitable aircraft galley device (e.g., an oven) is contemplated herein.

In accordance with at least one aspect of this disclosure, a system can include an insert as disclosed herein (e.g., as described above) and a software app for a PED configured to allow the PED to communicate with the data tag and/or to communicate with the wireless network module. For example, the insert host network data stored in the tag can include insert host network ID (Identifier) or SSID (Service Set Identifier) and insert host network password. The software app can be configured to automatically configure one or more wireless settings of the wireless network module to allow the insert to connect to the aircraft network. The software app can be configured to provide aircraft network ID and aircraft network password to the wireless network module.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is an illustrative view of an embodiment of an insert in accordance with this disclosure;
Fig. 2 is an illustrative view of an embodiment of a system in accordance with this disclosure; and
Fig. 3 is a block diagram of an embodiment of a method in accordance with this disclosure.

### DETAILED DESCRIPTION

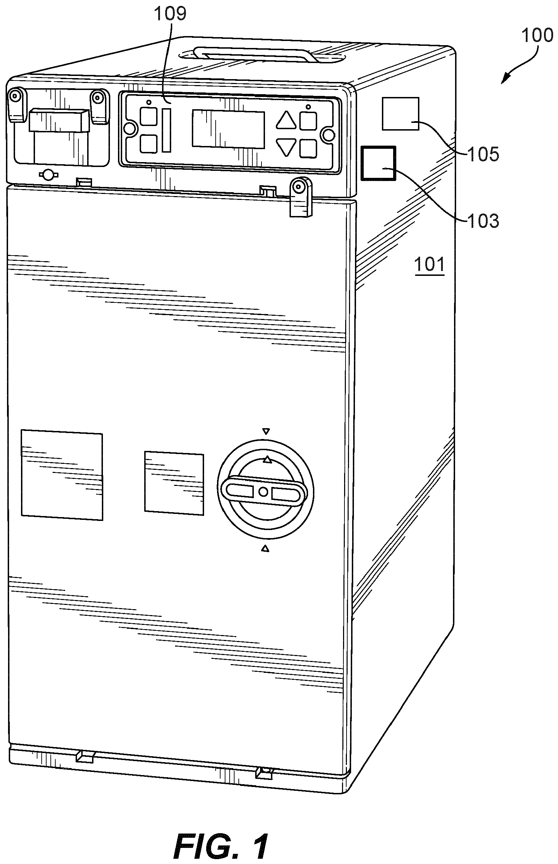

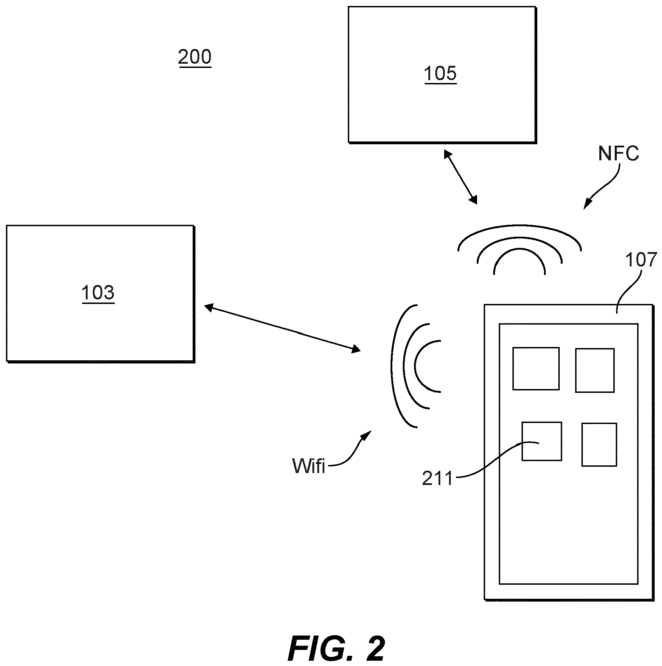

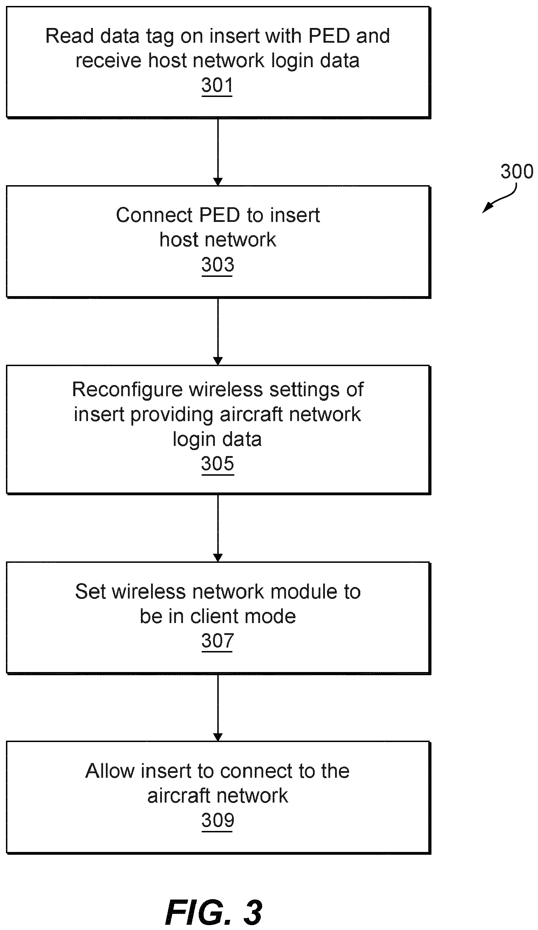

Reference will now be made to the drawings wherein like reference numerals identify similar structural features or aspects of the subject disclosure. For purposes of explanation and illustration, and not limitation, an illustrative view of an embodiment of an insert in accordance with the disclosure is shown in Fig. 1 and is designated generally by reference character 100. Other embodiments and/or aspects of this disclosure are shown in Figs. 2 and 3.

Referring to Figs. 1 and 2, an aircraft insert 100 includes a body 101 and a wireless network module 103 configured to create an insert host network for one or more devices (e.g., a Personal Electronic Device such as a smartphone or tablet) to connect to the wireless network module 103 in a host mode. The wireless network module 103 can also be configured to connect to an aircraft network in a client mode (e.g., to communicate with one or more aircraft devices and/or Personal Electronic Devices over the aircraft network). The wireless network module 103 can include any suitable hardware (e.g., a wifi card) and/or any suitable software module(s) (e.g., suitable wifi hosting and client firmware) configured to perform any and/or all suitable disclosed method(s)/function(s).

The insert 100 includes a data tag 105 mounted on or within the body 101. The data tag 105 can be readable by a Personal Electronic Device (PED) 107 (e.g., a smart phone, a tablet, or a dedicated device that may be an extension to smart phone or tablet) and can have insert host network information stored thereon to allow the PED 107 to connect to the insert host network when the wireless network module 103 is in the host mode. For example, the data tag 105 can be a wireless communication tag configured to be read and/or written to by a PED 107. For example, the data tag 105 can be Radio Frequency Identification (RFID) tag (e.g., a near-field communication (NFC) tag). Any suitable type of tag having any suitable hardware and/or software to allow wireless communication is contemplated herein. The data tag 105 can include any suitable hardware (e.g., an NFC device with data storage medium) and/or any suitable software module(s) (e.g., suitable NFC communication firmware) configured to perform any and/or all suitable disclosed method(s)/function(s).

In certain embodiments, the data tag 105 can be or include a barcode or QR code (e.g., with insert host network log in information) to be read by a camera of the PED 107. Any suitable type of data tag 105 is contemplated herein, although it is contemplated that a tag having an electronic storage medium may be easier to use and update as no physical labeling maintenance or replacement is required (e.g., when insert host network information changes).

The data tag 105 can include any suitable type of data. For example, in certain embodiments, the insert host network data can include insert host network ID (Identifier) or SSID (Service Set Identifier) and insert host network password. In certain embodiments, the insert host network data can include information that can be used to generate a password, for example a seed value or algorithm parameters. For example, in certain embodiments, the password can be calculated from the insert serial number. In certain embodiments, a similar aircraft network tag can be disposed in the galley or other suitable aircraft location and have aircraft network data, such that the PED can use this to obtain aircraft network information. In certain embodiments, the insert host network data can be default, constant network data (e.g., preset).

The wireless network module 103 can be configured to receive aircraft network information from the PED 107 in the host mode in order to connect to the aircraft network when the wireless network module 103 is in the client mode. For example, when the wireless network module 103 is in the host mode, the wireless network module 103 can be configured with the aircraft network information from the PED 107 to connect to the aircraft network when switched to the client mode. In certain embodiments, the wireless network module 103 can be configured to be manually set into host mode by a user input using an interface 109 of the insert 100. In certain embodiments, the wireless network module 103 can be configured to automatically change to host mode when an aircraft network is not connected to and/or found within a preset period of time or connection attempts.

When configuring the insert 100, the PED 107 can be first used to read insert host network data from the data tag 105, for example. Then, in certain embodiments, in the host mode, the wireless network module 103 can be configured to allow the PED 107 to connect to the wireless network module 107 (by the PED using the insert host network data from the data tag 105). Then the wireless network module 103 can receive aircraft network data from the PED 107, then switch to the client mode (e.g., due to a power cycle, or in response to receiving aircraft network data, or due to the PED actively reconfiguring the mode after providing the aircraft network data). The wireless network module 103 can then connect to the aircraft network using the aircraft network data provided by the PED 107. Any other suitable process using the disclosed embodiments is contemplated herein.

In certain embodiments, the insert 100 can be an oven, e.g., as shown. Any other suitable aircraft insert is contemplated herein (e.g., one or more galley devices or any other suitable insertable aircraft device).

In accordance with at least one aspect of this disclosure, an aircraft galley device (e.g., an oven) can be or include any suitable embodiment of an insert (e.g., 100) disclosed above and/or portions thereof. Any suitable aircraft galley device is contemplated herein.

In accordance with at least one embodiment of this disclosure, a system 200, e.g., as shown in Fig. 2, can include an insert 100 as disclosed herein (e.g., as described above) and a software app 211 for a PED 107 configured to allow the PED 107 to communicate with the data tag 105 and/or to communicate with the wireless network module 103. The software app 211 can include any suitable software module(s) configured to allow for wireless communication with the data tag 105 and/or the wireless network module 103.

The software app 211 can be configured to automatically configure one or more wireless settings of the wireless network module 103 to allow the insert 100 to connect to the aircraft network (e.g., via a wifi router on the aircraft). The software app 211 can be configured to provide aircraft network ID and aircraft network password to the wireless network module 103, for example. In certain embodiments, the system 200 can include the PED 107. Any other suitable component(s) for the system 200 is/are contemplated herein.

Referring additionally to Fig. 3, a method 300 can include reading, e.g., a block 301 a data tag on insert with a PED and receiving insert host network login data. The method 300 can include connecting to the PED to a host network, e.g., at block 303. The method 300 can include reconfiguring wireless settings of the insert and providing aircraft network login data to the insert (e.g., the wireless network module thereof), e.g., at block 305. The wireless network module of the insert can store the aircraft network data in non-volatile memory. The method 300 can include setting wireless network module to be in client mode, e.g., at block 307. The method 300 can include allowing the insert to connect to the aircraft network, e.g., at block 309. In certain embodiments, the PED can get the network data from either a database or a tag in the galley, for example.

In accordance with certain embodiments, by placing a tag on or in the equipment that holds the insert default log in data, this can be read by a PED and automatically log in and configure the insert for the aircraft it is installed in. Embodiments can include redundant tags, for example. Certain equipment can have a tag with identification and repair data. In certain embodiments, this can be the data tag and the network information can be added to this tag. Embodiments can be applied to any suitable insert devices, e.g., chillers, freezers, trash compactors, ovens. In certain embodiments, an NFC tag can be placed in the galley and can include aircraft network information for the PED to scan and receive.

In certain embodiments, the insert can be set to commissioning mode (i.e., host mode) either automated (because it can't find a network) or manual (e.g., holding specific buttons for a certain time). This can put the insert into a wireless host mode to receive connections. An operator can now use a PED with a specific app to read NFC data of the insert, which will contain the log-in data of the insert. A software app on the PED can then automatically connect to the insert's wireless host, for example. From this point the software app can automatically configure the wireless settings of the insert so that the insert can connect to the aircraft wireless network. At this point, the PED can reprogram the insert device network data to connect as a client to the aircraft network. For example, the PED can give the insert the network name and password for example. The insert can then store this information in non-volatile memory (e.g., so that it will remember the credentials every time it is powered up after the PED programmed it). The software app can then reset the wireless network module of the insert, which will then connect to the aircraft network and be ready for use. This can be repeated by resetting the insert into commissioning mode. The galley can have a separate tag with aircraft network info on it for PED to connect quickly. This can be read prior to programming the insert, for example.

Some embodiments may allow PED (e.g., smart phone) interaction/authentication on inserts without modification to the visual front of the insert or the user interface. Embodiments may require very little manual handling, making it less stressful for the crew in commissioning the inserts. In certain embodiments, no modification of the front of the equipment required. Embodiments may be supported by most modern smartphones and tablets. Embodiments may be applicable to any suitable aircraft equipment.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

## Claims

1. An aircraft insert, comprising:
a body (101);
a wireless network module (103) configured to create an insert host network for one or more devices to connect to the wireless network module in a host mode, and to connect to an aircraft network in a client mode; and
a data tag (105) mounted on or within the body, the data tag readable by a Personal Electronic Device, PED, (107) and having insert host network information to allow the PED to connect to the insert host network when the wireless network module is in the host mode, wherein the wireless network module is configured to receive aircraft network information from the PED in the host mode to connect to the aircraft network when in the client mode.

2. The insert of claim 1, wherein the data tag is a wireless communication tag configured to be read and/or written to by a PED.

3. The insert of claim 2, wherein the data tag is Radio Frequency Identification, RFID, or Near Field Communication, NFC, tag.

4. The insert of claim 3, wherein the data tag is a barcode or QR code.

5. The insert of any preceding claim, wherein the wireless network module is configured to be manually set into host mode by a user input to an interface of the insert.

6. The insert of any of claims 1 to 4, wherein the wireless network module is configured to automatically change to host mode when an aircraft network is not connected to and/or found within a preset period of time or connection attempts.

7. The insert of any preceding claim, wherein, in the host mode, the wireless network module is configured to allow the PED to connect to the wireless network module, then receive aircraft network data from the PED, then switch to the client mode, and then connect to the aircraft network using the aircraft network data provided by the PED.

8. The insert of any preceding claim, wherein the insert is an oven.

9. The aircraft insert of any preceding claim, being an aircraft galley insert device.

10. A system, comprising:
the insert (100) as recited in any preceding claim; and
a software app (211) for a PED configured to allow the PED to communicate with the data tag and/or to communicate with the wireless network module.

11. The system of claim 10, wherein the insert host network data includes insert host network ID, Identifier, or SSID, Service Set Identifier, and insert host network password.

12. The system of claim 11, wherein the software app is configured to automatically configure one or more wireless settings of the wireless network module to allow the insert to connect to the aircraft network.

13. The system of claim 12, wherein the software app is configured to provide aircraft network ID and aircraft network password to the wireless network module.
